**Europäisches Patentamt**

**European Patent Office**

**Office européen des brevets**

(19)

(11) Veröffentlichungsnummer: **0 090 792**
**A2**

# (12) EUROPÄISCHE PATENTANMELDUNG

(21) Anmeldenummer: **83890025.6**

(22) Anmeldetag: **21.02.83**

(51) Int. Cl.³: **E 21 F 11/00, E 21 F 13/00**

(30) Priorität: **29.03.82 AT 1212/82**

(43) Veröffentlichungstag der Anmeldung: **05.10.83**
**Patentblatt 83/40**

(84) Benannte Vertragsstaaten: **DE FR GB IT**

(71) Anmelder: **VOEST-ALPINE Aktiengesellschaft, Friedrichstrasse 4, A-1011 Wien (AT)**

(72) Erfinder: **Strahsner, Emanuel, Goldregenstrasse 7, A-8720 Knittelfeld (AT)**

(74) Vertreter: **Haffner, Thomas M., Dr. et al, Patentanwaltskanzlei Dipl.-Ing. Adolf Kretschmer Dr. Thomas M. Haffner Schottengasse 3a, A-1014 Wien (AT)**

(54) **Fahrerkabine für Bergbaufahrzeuge.**

(57) Eine Fahrerkabine (2) für Bergbaufahrzeuge, insbesondere Schrämmaschinen, weist ein Dach und gegebenenfalls Seitenwände auf. Zumindest Teilbereiche des Daches und/oder der Seitenwände sind mit Kühlelementen (10) verbindbar. Zweckmässig sind Teile des Daches und/oder der Seitenwände doppelwandig ausgebildet und in dem auf diese Weise erhaltenen Hohlraum (9) können die Kühlelemente (10) untergebracht werden.

EP 0 090 792 A2

Fahrerkabine für Bergbaufahrzeuge

Die Erfindung bezieht sich auf eine Fahrerkabine für Bergbaufahrzeuge, insbesondere für Schrämmaschinen, mit einem Dach und gegebenenfalls Seitenwänden. Beim Arbeiten untertag können beträchtliche Umgebungstemperaturen auftreten und die in der Fahrerkabine resultierenden Raumtemperaturen, welche bis zu 60° und darüber betragen können, beeinträchtigen die Konzentrationsfähigkeit des Fahrers und stellen damit ein Sicherheitsrisiko dar. Der Gedanke, bei untertägig arbeitenden Bergbaumaschinen, wie beispielsweise Teilschnittschrämmaschinen, Klimageräte einzusetzen, scheitert unter anderem darin, daß bergbehördliche Vorschriften die Verwendung kommerzieller Klimageräte auf Grund des fehlenden Schlagwetterschutzes und der ungenügenden Druckfestigkeit verbieten. So sind beispielsweise für die Ventilatoren in Klimageräten keine schlagwetterfesten Ausbildungen entwickelt worden und es ist auch die Verwendung von Werkstoffen, wie Aluminium, deshalb unstatthaft, da herabstürzende Brocken an Aluminium Funken schlagen können. Darüberhinaus wären auch entsprechend adaptierte Klimageräte mit Rücksicht auf die hohen mechanischen Belastungen störanfällig und im rauhen Grubenbetrieb den Erschütterungen kaum gewachsen.

Die Erfindung zielt nun darauf ab, eine besonders einfache und betriebssichere Ausbildung für eine Kühlung der Fahrerkabine für Bergbaufahrzeuge zu schaffen, mit welcher unter geringstem Aufwand die Sicherheit im Grubenbetrieb erhöht wird. Zur Lösung dieser Aufgabe besteht die Erfindung im wesentlichen darin, daß zumindest Teilbereiche des Daches und/oder der Seitenwände mit Kühlelementen, wie z.B. Kältespeichern, verbindbar sind. Durch die Ausbildung des Daches und/oder der Seitenwände mit Einrichtungen zum Festlegen von Kühlelementen, wie z.B. Kältespeichern, wird eine mechanisch überaus stabile und effiziente Konstruktion geschaffen, welche den gewünschten Kühleffekt bringt. Vorzugsweise sind hiebei das Dach und/oder die Seitenwände zumindest teilweise doppelwandig ausgebildet und weisen wenigstens einseitig offene bzw. öffenbare Ausnehmungen für die Aufnahme von Kühlelementen auf. Eine derartige Ausbildung bietet neben der besonders einfachen Möglichkeit der Unterbringung der Kühlelemente zusätzlich den Vorteil, daß durch die Doppelwandigkeit die Wärmeisolation verbessert werden kann. Hiebei ist vorzugsweise zumindest die Außenhaut des Daches oder der Wände gegen Wärmeverlust gesichert.

Innerhalb des doppelwandigen Bereiches des Daches oder der Wände können zumindest an einem Ende offene oder öffenbare Rohre angeordnet sein. Diese Rohre können, wenn sie an beiden Enden offen sind, als Kühlschlange geschaltet sein und von dem für die Niederschlagung des Staubes erforderlichen Wasser durchströmt werden. Einseitig offene Rohre können von der öffenbaren Seite her mit Eis oder anderen Kältemitteln befüllt werden, wobei in Abständen eine Regeneration des Kältemittels erforderlich ist. Die Kühlwirkung kann durch die Anzahl der Rohre in einfacher Weise vorgegeben werden und bei Verwendung einzelner Rohrstücke mit einem Boden und einem Deckel, welche darüberhinaus zur Verbesserung der Kälteabgabe aufgeschweißte oder angegossene Rippen aufweisen können, können die Rohre selbst als Kühlelemente wirken, welche mit Eis, Trockeneis oder flüssigen Kältemitteln gefüllt werden können. Die Anordnung von am Mantel festgelegten Rippen dient hiebei neben der Verbesserung der Wärmeabgabe auch als Abstandhalter gegenüber der Innen- und der Außenhaut des Daches bzw. der Seitenwände und erlaubt es, einen freien Querschnitt für das Durchblasen von Luft, welche im Kontakt mit den Kühlelementen gekühlt wird, sicherzustellen. Vorzugsweise ist hiebei die Ausbildung so getroffen, daß an den doppelwandigen Bereich des Daches und/oder der Seitenwände ein vorzugsweise von einem Hydromotor angetriebenen Gebläse angeschlossen ist und daß zumindest im Dach wenigstens eine nach innen gerichtete Antrittsöffnung für die vom Gebläse über die Kühlkörper geführte Luft vorgesehen ist. Ein derartiges Gebläse muß mit Rücksicht auf die bergbehördlichen Vorschriften mit einem schlagwettergeschützten Antrieb ausgestattet sein und ein derartiger Antrieb kann für ein derartiges Gebläse in besonders einfacher Weise durch einen Hydromotor gebildet werden.

Soferne die im Dach oder den Seitenwänden angeordneten Rohre nicht unmittelbar selbst als Kühlelemente ausgebildet sind, kann es vorteilhaft sein, derartige Rohre als Aufnahmeeinrichtungen für in diese Rohre einzuschiebende Kühlelemente zu verwenden. In besonders einfacher Weise können hiebei die Kühlelemente über seitlich öffenbare Öffnungen in das doppelwandige Dach und/oder die Seitenwände einschiebbar sein.

Vorzugsweise sind hiebei die Kühlelemente als in Rohren verriegelbare zylindrische Elemente ausgebildet.

Ein wesentlicher Vorteil der erfindungsgemäßen Ausbildung gegenüber der Verwendung von Klimageräten ist unter anderem neben der einfachen Konstruktion darin zu erblicken, daß keine zusätzliche Wärmeleistung an die Umgebung abgegeben wird, wie dies bei Klimageräten nicht zu vermeiden ist. Die Anordnung von Kühlelementen in einem Gehäuse, welches gleichzeitig als Dach oder Rückwand der Fahrerkabine dient, bringt hiebei den Vorteil, daß die kühlste Zone sich in Kopfhöhe des Fahrers befindet, wodurch sich bei geringstem Aufwand der größte Effekt ergibt.

Die Erfindung wird nachfolgend anhand eines in der Zeichnung dargestellten Ausführungsbeispieles näher erläutert.

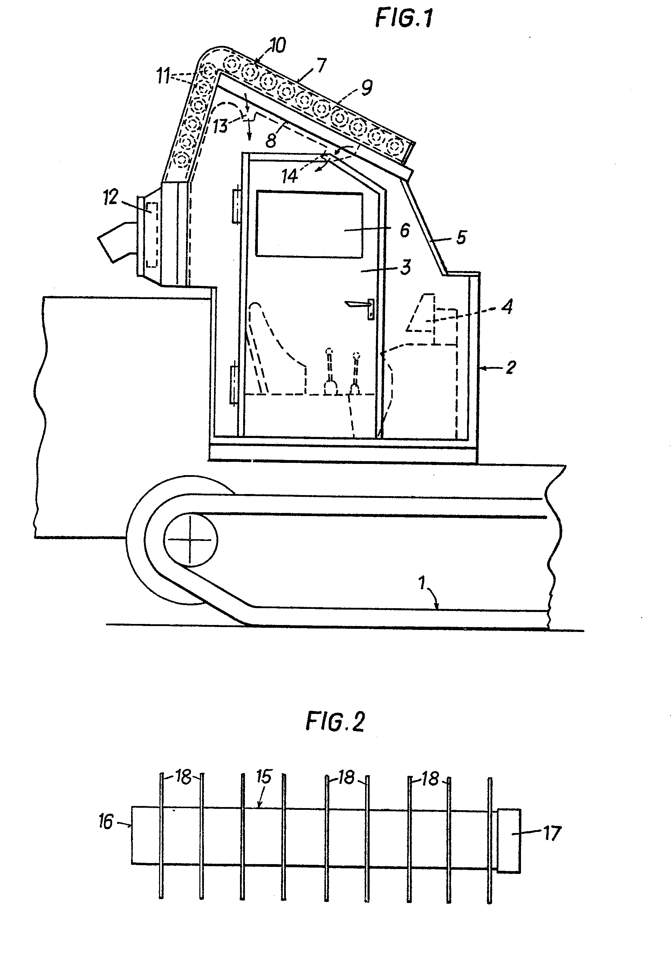

In dieser zeigen Fig. 1 eine schematische Seitenansicht der Kabine, teilweise im Schnitt, und Fig. 2 ein Kühlelement.

- 4 -

In der Zeichnung ist das Fahrwerk einer Streckenvortriebsmaschine schematisch durch die Raupen 1 angedeutet. Oberhalb des Fahrwerkes befindet sich am Chassis eine Fahrerkabine 2, welche über eine Türe 3 betreten werden kann. Innerhalb der Fahrerkabine 2 befinden sich die für die Steuerung der Maschine erforderlichen Betätigungsorgane sowie ein schematisch mit 4 angedeutetes Überwachungspult für die wesentlichen Maschinenfunktionen. Der Ausblick aus der Kabine ist über ein Fenster 5 und seitliche in der Tür 3 eingelassenen Fenster 6 möglich. Das Dach und Teile der Rückwand sind doppelwandig ausgebildet und weisen eine Außenwand 7 sowie eine Innenwand 8 auf. Der auf diese Weise ausgebildete Hohlraum 9 im Inneren des Daches und der Rückwand ist zu einer Seite der Maschine offen und erlaubt das Einschieben von Kühlelementen 10 bzw. die Anordnung von derartigen Kühlelementen. Bei der Ausbildung nach Fig. 1 sind hiefür Rohre 11 vorgesehen, welche in Abstand von der Innenwand 8 und der Außenwand 7 gehalten sind. An die Rückwand ist ein von einem Hydromotor angetriebenes Gebläse 12 angeschlossen, über welches gefilterte Luft durch den Raum 9 zwischen der Innenwand 8 und der Außenwand 7 des Daches bzw. der Rückwand hindurchgefördert wird. Die Luft überstreicht hiebei die Kühlelemente 10 und kann über in das Innere der Kabine mündende Austrittsöffnungen 13 und 14 wieder austreten. Die kühle Luft tritt somit in der Nähe des Kopfes des Fahrers aus.

Ein Kühlelement, wie es für die Kabine nach Fig. 1 Verwendung findet, ist in Fig. 2 vergrößert dargestellt.

Das Kühlelement 10 besteht nach Fig. 2 aus einem Rohr 15, welches einseitig einen Boden 16 aufweist. Das andere Stirnende des Rohres 15 ist öffenbar und weist einen aufsetzbaren Deckel 17 auf. Nach Entfernen des Deckels 17 läßt sich in das Rohr Eis, Trockeneis oder anderes Kältemittel einbringen. Der Deckel kann beispielsweise durch Aufschrauben mit dem Rohr dicht verbunden werden.

Der Mantel des Rohres 15 weist Rippen 18 auf, welche den Kälteaustausch zwischen dem Kühlelement 10 und der durch den Ventilator 12 geförderten Luft verbessern.

Die Austrittsöffnungen 13 und 14 im Inneren der Kabine 2 können in an sich bekannter Weise düsenartig ausgebildet und orientierbar sein, um den kalten Luftstrom geeignet zu richten.

- 6 -

Patentansprüche

1. Fahrerkabine für Bergbaufahrzeuge, insbesondere für Schrämmaschinen, mit einem Dach und gegebenenfalls Seitenwänden, dadurch gekennzeichnet, daß zumindest Teilbereiche des Daches und/oder der Seitenwände mit Kühlelementen (10), wie z.B. Kältespeichern, verbindbar sind.

2. Fahrerkabine nach Anspruch 1, dadurch gekennzeichnet, daß das Dach und/oder die Seitenwände zumindest teilweise doppelwandig ausgebildet ist bzw. sind und wenigstens einseitig offene bzw. öffenbare Ausnehmungen (11) für die Aufnahme von Kühlelementen (10) aufweist bzw. aufweisen.

3. Fahrerkabine nach Anspruch 2, dadurch gekennzeichnet, daß zumindest die Außenwand (7) des Daches oder der Seitenwände gegen Wärmeverlust gesichert ist.

4. Fahrerkabine nach Anspruch 2 oder 3, dadurch gekennzeichnet, daß innerhalb des doppelwandigen Bereiches des Daches oder der Seitenwände zumindest an einem Ende offene oder öffenbare Rohre (11) angeordnet sind.

5. Fahrerkabine nach Anspruch 4, dadurch gekennzeichnet, daß die Rohre (11) mit vorzugsweise von scheibenartigen Rippen gebildeten Abstandhaltern versehen sind.

6. Fahrerkabine nach Anspruch 3, 4 oder 5, dadurch gekennzeichnet, daß an den doppelwandigen Bereich des Daches und/oder der Seitenwände ein vorzugsweise von einem Hydromotor angetriebenen Gebläse (12) angeschlossen ist und daß zumindest im Dach wenigstens eine nach innen gerichtete Austrittsöffnung (13, 14) für die vom Gebläse (12) über die Kühlelemente (10) geführte Luft vorgesehen ist.

7. Fahrerkabine nach einem der Ansprüche 3 bis 6, dadurch gekennzeichnet, daß die Kühlelemente (10) über seitlich öffenbare Öffnungen in das doppelwandige Dach und/oder die Seitenwände einschiebbar sind.

8. Fahrerkabine nach einem der Ansprüche 4 bis 7, dadurch gekennzeichnet, daß die Kühlelemente (10) als in Rohren (11) verriegelbare zylindrische Elemente (15) ausgebildet sind.

**FIG.1**

**FIG.2**